# EUROPEAN PATENT SPECIFICATION

(11) **EP 3 574 195 B1**
(45) Date of publication and mention of the grant of the patent: **11.10.2023**
(21) Application number: 18744377.5
(22) Date of filing: 12.01.2018
(51) Int. Cl.: F01P 3/02, F01P 7/16, F01K 23/06, F02B 29/04

(54) **A COOLING SYSTEM FOR COOLING OF A COMBUSTION ENGINE**
KÜHLSYSTEM ZUR KÜHLUNG EINES VERBRENNUNGSMOTORS
SYSTÈME DE REFROIDISSEMENT PERMETTANT DE REFROIDIR UN MOTEUR À COMBUSTION

(30) Priority: 26.01.2017 SE 1750061
(43) Date of publication of application: 04.12.2019
(73) Proprietor: Scania CV AB, 151 87 Södertälje (SE)
(72) Inventor: KARDOS, Zoltan, 151 35 Södertälje (SE); LINDERYD, Johan, 144 62 Rönninge (SE); HÖGLUND, Henrik, 646 32 Gnesta (SE); ASPFORS, Jonas, 155 30 Nykvarn (SE)
(74) Representative: Scania CV AB
(86) International application number: PCT/SE2018/050022
(87) International publication number: WO 2018/139968

(56) References cited:
- EP-A1- 1 405 991
- EP-A1- 1 674 688
- WO-A1-2012/125107
- DE-A1- 10 219 481
- DE-A1- 10 342 935
- DE-A1- 19 938 614
- DE-B3-102015 009 580
- DE-T2- 69 707 980
- FR-A1- 2 860 833
- US-A- 6 152 088
- US-A1- 2014 020 904

## Description

### BACKGROUND OF THE INVENTION AND PRIOR ART

The present invention relates to a cooling system for cooling of a combustion engine according to the preamble of claim 1 and a vehicle comprising such a cooling system. During normal operation of a conventional cooling system for a combustion engine, coolant at a temperature within the range of 80-90°C is directed to all parts of the combustion engine. However, the cylinder head in an internal combustion engine receive more heat energy from the combustion processes than the cylinder block. In operating conditions in which the internal combustion engine is placed under a heavy load for a long period, the cylinder head can achieve a very high temperature. Such a cooling system is shown in FR 2 860 833 A1.

Cooling systems can also be used for cooling other objects beyond the combustion engine such as the working medium in a condenser of a WHR system (Waste Heat Recovery System). In order to achieve a high thermal efficiency in a WHR-system, the working medium in the condenser is to be cooled to a condensation temperature as low as possible and substantially without subcooling. Consequently, in order to achieve a high thermal efficiency in a WHR-system, the working medium is to be cooled by coolant at a specific temperature and flow. In case the WHR system receives heat energy from the exhaust gases of the combustion engine, the required cooling of the working medium in the condenser may vary rapidly. In such cases, it is difficult to provide a continuously cooling of the working medium in the condenser resulting in a high thermal efficiency of a WHR-system.

The cooling system can also be used for cooling of charge air in a charge air cooler.

Twin turbo installations can be used to increase the power of a combustion engine by supplying charge air of a high pressure to the combustion engine. In a twin turbo installation, the charge air is compressed in a first stage by a low pressure compressor and in a second stage by a high pressure compressor. The amount of charge air which can be received and compressed in the compressors depends on the specific volume of the charge air. The charge air leaving the low pressure compressor has a raised pressure and a raised temperature. In order to reduce the specific volume of the charge air and increase the amount of charge air which can be received and compressed in the high pressure compressor, the charge air can be cooled in a charge air cooler arranged in a position between the compressors. It is desired to cool the charge air to a temperature as low as possible in such a charge air cooler before it enters the high pressure compressor. The charge air can be cooled in a further charge air cooler in a downstream position of the high pressure compressor, for example, by air of ambient temperature in order to decrease the specific volume of the charge air and increase the amount of charge air which can be delivered to the combustion engine.

### SUMMARY OF THE INVENTION

The purpose of the present invention is to provide a relatively simple cooling system comprising one radiator which is able to cool the cylinder block and the cylinder head combustion engine with coolant at different temperatures.

The above mentioned purpose is achieved by the cooling system according to claim 1. During many operating conditions, the first valve device distributes a coolant flow to a radiator and to a radiator bypass line. Thus, the first valve device makes it possible to create two coolant flows at two different temperatures. The second valve receives the coolant flows from the radiator and the radiator bypass and it distributes them such that a coolant flow of a first temperature is directed to the cylinder block and a coolant flow of a second lower temperature is directed to the cylinder head. In this case, it is possible to provide an increased cooling of the cylinder head which receives more heat energy from the combustion processes than the cylinder block. Furthermore, it is possible to cool the cylinder head to a lower temperature than the cylinder block. A lower temperature of the cylinder head is favorable in view of fuel consumption. The cylinder block should however have a higher temperature in order to reduce friction in bearings. In this case, it is possible to create two coolant flows of different temperatures for individual cooling of the cylinder block and the cylinder head of a combustion engine by means of a simple cooling system including few components.

The cylinder head outlet line is configured to direct coolant to the cylinder block inlet line. Such a design of the cooling system makes it also possible to create coolant flows of different temperatures to the cylinder head and the cylinder block during operating conditions when the first valve device directs the entire coolant flow to the bypass line or the radiator. In this case, a mixture of coolants from the second valve and the cylinder head outlet line is directed to the cylinder block. Since the coolant in the cylinder head outlet line has been heated in the cylinder head, the coolant mixture entering the cylinder block has a higher temperature than the coolant flow entering the cylinder head. Furthermore, this measure results in that the entire coolant flow in the cooling system is led throw the cylinder block.

The first valve device is configured to receive coolant from the cylinder block outlet line. The coolant has usually its highest temperature when it leaves the cylinder block of the combustion engine. The first valve device directs the coolant to the radiator or the radiator line in view of the temperature of the coolant in the cylinder block outlet line.

According to an embodiment of the invention, the cooling system comprises a control unit configured to control the first valve device and the second valve device. The control unit may have access to desired first coolant temperatures and second coolant temperatures at different operating condition and to control the valve devices such that coolant at said desired coolant temperatures are directed to the cylinder block and the cylinder head.

According to an embodiment of the invention, the control unit is configured to receive information from a number of temperature sensors arranged in different positions of the cooling system and to control the valve devices by means of this information. The control unit may receive information about the coolant temperature in the cylinder block outlet line and the cylinder head outlet line. The temperatures of the coolants in this lines are related to the temperatures of the cylinder block and the cylinder head. In view of this information, it is possible for the control unit to control the valve devices such that possible differences between the actual and desired temperatures of the cylinder block and the cylinder head will be eliminated. However, the control unit may also receive information and control the cooling system in view of coolant temperatures in other parts of the cooling system and other kinds of operating parameters.

According to an embodiment of the invention, the control unit is configured to estimate a suitable second coolant temperature and to control the first valve device such that it directs a coolant flow to the radiator such that the coolant leaving the radiator has a temperature which is lower or equal to the second coolant temperature. The coolant leaving the radiator is directed, via the cylinder head inlet line, to the cylinder head. Thus, the coolant leaving the radiator has to have a temperature which is lower or equal to the second coolant temperature. During many operating conditions, it is possible to direct a relatively small coolant flow to the radiator. A small coolant flow through the radiator can be cooled to a temperature close to ambient temperature. The coolant flow through the radiator can, for example, be cooled to a temperature around 30°.

According to an embodiment of the invention, the control unit is configured to estimate a suitable first temperature of the coolant to be directed to the cylinder block and to control the second valve device such that it delivers a coolant flow to the first object inlet line which in a mixed state with the coolant flows from the cylinder head outlet line creates a coolant flow at the first temperature to the cylinder block. A suitable first coolant temperature for cooling of the cylinder block may be in the range of 80-90°C.

According to an embodiment of the invention, the cooling system comprises a further circuit for cooling of a further object by coolant at the second temperature. During operation of a vehicle, there are objects to be cooled by coolant at a relatively low temperature. It is possible to add one or several such further circuits to the cooling system which directs coolant at the second temperature to the further object. The further circuit may comprise a further object outlet line configured to direct coolant from the further object to the cylinder block inlet line. In this case, the entire coolant flow is directed to the cylinder block. In this case, the coolant flow directed to the cylinder block comprising a mixture of the initial coolant flow in the cylinder block inlet line, the coolant flow in the cylinder head outlet line and the coolant flow in the further object outlet line.

According to an embodiment of the invention, the further object is a working medium in a condenser of a WHR system. In such a case, the control unit may be configured to determine a suitable condensation temperature of the working medium in the condenser and to estimate a coolant flow and a second coolant temperature at which the working medium obtains the determined condensation temperature and to control the first valve device and the second valve device such that the estimated coolant flow at the second coolant temperature is directed to the condenser. In case ethanol is the working medium, the second coolant temperature may be around 70°C.

According to an embodiment of the invention, the further object is charge air in a charge air cooler arranged in a position between a low pressure compressor and a high pressure compressor. It is useful to cool the charge air in a position between the compressors to a temperature as low as possible in order to increase the efficiency of the compressors.

The first valve device is a three way valve. The three way valve may comprises one inlet opening and two outlet openings. The three way valve may receive a coolant flow from the cylinder block outlet line and direct a first part of it to the radiator and a remaining part of it to the radiator bypass line. In this case, the first valve device is designed as a single valve. Preferably, the first valve device is adjustable in a stepless manner. In this case, it is possible to vary the coolant flow to the radiator and the radiator bypass line with a high accuracy. Alternatively, the first valve device is designed as two two way valves wherein a first two way valve is arranged in a radiator inlet line and a second two way valve is arranged in the radiator bypass line.

According to an embodiment of the invention, the second valve device is a three way valve. The three way valve may receive a coolant flow from the radiator bypass line and directs a part of it to the cylinder block inlet line and a remaining part of it to the cylinder head inlet line. Alternatively, the three way valve directs the entire coolant flow from the radiator bypass line and a part of the coolant flow from the radiator to the cylinder block inlet line. A remaining part of the coolant flow is directed from the radiator to the cylinder head inlet line. In this case, the second valve device is designed as a single valve. Preferably, the second valve device is adjustable in a stepless manner. In such a case, it is possible to adjust the coolant flow to the cylinder block inlet line and the cylinder head inlet line with a high accuracy. Alternatively, the second valve device is designed as two two way valves wherein a first two way valve is arranged in the cylinder block inlet line and a second two way valve is arranged in a radiator outlet line.

### BRIEF DESCRIPTION OF THE DRAWINGS

In the following preferred embodiments of the invention are described, as examples, with reference to the attached drawings, in which:
- Fig. 1: shows a cooling system according to a first embodiment of the invention,
- Fig. 2: shows a cooling system according to a second embodiment of the invention and
- Fig. 3: shows a cooling system according to a third embodiment of the invention.

### DETAILED DESCRIPTION OF PREFERRED EMBODIMENTS OF THE INVENTION

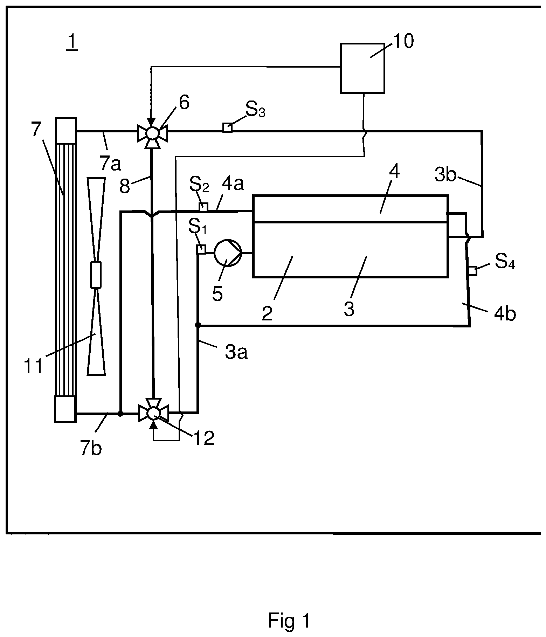

Fig. 1 shows a schematically disclosed vehicle 1 powered by a combustion engine 2. The combustion engine 2 comprises cylinder block 3 and cylinder head 4. The vehicle 1 may be a heavy vehicle and the combustion engine 2 may be a diesel engine. The vehicle 1 comprises a cooling system configured to cool the cylinder block 3 and the cylinder head 4 by coolant at different temperatures. A pump 5 circulates coolant in the cooling system. The cooling system comprises a cylinder block inlet line 3a directing coolant to the cylinder block 3. When the coolant has circulated through the cylinder block 3, it is received in a cylinder block outlet line 3b. A first valve device in the form of a first three way valve 6 is arranged at an end of the cylinder block outlet line 3b. The first three way valve 6 has one inlet opening and two outlet openings. The cooling system comprises a radiator inlet line 7a directing coolant to a radiator 7 and a radiator outlet line 7b receiving coolant from the radiator 7. The cooling system comprises a radiator bypass line 8 directing coolant past the radiator 7. The first three way valve 6 is controlled by a control unit 10. The first three way valve 6 is adjustable in a stepless manner. Thus, it is possible for the first three way valve 6 to receive coolant from the cylinder block outlet line 3b and distribute it in a stepless manner to the radiator inlet line 7a and the radiator bypass line 8. A radiator fan 11 and ram air provides a cooling air flow through the radiator 7. Other coolers such as, for example, a charge air cooler may be mounted in a position upstream of the radiator 7.

The coolant leaving the radiator 7 is distributed, to a cylinder head inlet line 4a. The cooling system comprises a second valve device in the form of a second three way valve 12. The second valve device 12 may direct a part of the coolant leaving the radiator 7 to the cylinder block inlet line 3a. Alternatively or in combination, the second three way valve 12 receives coolant from the bypass line 8. The second three way valve may distribute the coolant from the bypass line 8 to the cylinder block inlet line 3 and the cylinder head inlet line 4a. The second three way valve 12 is controlled by the control unit 10. The second three way valve 12 is adjustable in a stepless manner. A cylinder head outlet line 4b receives coolant from the cylinder head 4 and directs it to the cylinder block inlet line 3a. Thus, the entire coolant flow is led to the cylinder block 3. The cooling system comprises a plurality of sensors sensing the temperature of the coolant in different positions of the cooling system. In this case, a first sensor S₁ senses a first coolant temperature T₁ in the cylinder block inlet line 3a, a second sensor S₂ senses a second coolant temperature T₂ in the cylinder head inlet line 4a, a third sensor S₃ senses a third coolant temperature T₃ in the cylinder block outlet line 3b and a fourth sensor S₄ senses a fourth coolant temperature T₄ in the cylinder head outlet line 4b. The third temperature T₃ is related to the temperature of the cylinder block 3 and the fourth temperature T₄ is related to the temperature of the cylinder head 4.

During operation, the control unit 10 receives information from at least the third sensor S₃ and the fourth sensor S₄ about the actual coolant temperatures T₃, T₄ which are related to the temperatures of the cylinder block 3 and the cylinder head 4. The control unit 10 has access to information about a desired temperature range T₃ᵣ of the cylinder block 3 and a desired temperature range T₄ᵣ of the cylinder head 4 at different operating conditions. During operating conditions when the control unit 10 receives information from the sensors S₃, S₄ indicating that the coolant temperatures T₃, T₄ and the temperature of the cylinder block 3 and the cylinder head 4 are lower than the desired coolant temperature ranges T₃ᵣ, T₄ᵣ, it controls the first three way valve 6 such that it directs the entire coolant flow to the bypass line 8. The second three way valve 12 receives the coolant flow from the radiator bypass line 8. The control unit 10 estimates an appropriate distribution of the coolant flow to the cylinder block inlet line 3a and the cylinder head inlet line 4a in order to eliminate the difference between the actual coolant temperatures T₃, T₄ and the desired coolant temperatures ranges T₃ᵣ, T₄ᵣ. The control unit 10 controls the second three way valve 12 such that it provides said appropriate distribution of the coolant flow to the cylinder block inlet line 3a and the cylinder head inlet line 4a. Thus, the second way valve 12 directs coolant at the third temperature T₃ to an initial part of the cylinder block inlet line 3a and the cylinder head inlet line 4a. In this case, the coolant flow to the cylinder head line 4 has a second temperature T₂ which corresponds to the third coolant temperature T₃. However, the coolant flow in the cylinder block inlet line 3a are mixed with a coolant flow from the cylinder head outlet line 4b. Since the latter coolant flow have been heated in the cylinder head 4, the coolant flow entering the cylinder block 3 has a first temperature T₁ which is higher than the third coolant temperature T₃ and the second coolant temperature T₂.

During operating conditions when the control unit 10 receives information from the sensor S₃, S₄ indicating that the coolant temperatures T₃, T₄ and the temperature of the cylinder block 3 and the cylinder head 4 are higher than the desired coolant temperature ranges T₃ᵣ, T₄ᵣ, it controls the first three way valve 6 such that it directs the entire coolant flow to the radiator 7. The coolant flow from the radiator outlet line 7b is controlled by the second three way valve 12. The control unit 10 estimates an appropriate distribution of the coolant flow to the cylinder block inlet line 3a and the cylinder head inlet line 4a in order to eliminate the difference between the actual coolant temperatures T₃, T₄ and the desired third coolant temperatures ranges T_{3d}, T_{4d}. The control unit 10 controls the second three way valve 12 such that it provides said appropriate distribution of the coolant flow to the cylinder block inlet line 3a and the cylinder head inlet line 4a. Thus, the second way valve 12 directs a coolant flow at a radiator temperature T_{R} to an initial part of the cylinder block inlet line 3a and the cylinder head inlet line 4a. In this case, the coolant flow to the cylinder head line 4 is at a second temperature T₂ which corresponds to the radiator temperature T_{R}. However, the coolant flow in the cylinder block inlet line 3a are mixed with a coolant flow from the cylinder head outlet line 4b. Since the latter coolant flow have been heated in the cylinder head 4, the coolant flow entering the cylinder block 3 has a first temperature T₁ which is higher than the radiator temperature T_{R} and the second coolant temperature T₂.

During most operating conditions, the third coolant temperature T₃ and the fourth coolant temperature T₄ are within acceptable temperature ranges T₃ᵣ, T₄ᵣ. In this case, the control unit 10 controls the first three way valve 6 such that it directs a part of the coolant flow to the radiator 7 and a remaining part of the coolant flow to the radiator bypass line 8. In this case, the first valve device provides two coolant flows of different temperatures. The second way valve 12 can be controlled in two different manners. In one manner, the second valve device 12 directs the entire coolant flow from the bypass line 8 and a part of the coolant flow from the radiator outlet line 7b to the cylinder block inlet line 3a. The remaining part of the coolant flow from the radiator outlet line 7b is directed to the cylinder head inlet line 4a. Thus, the coolant entering the cylinder head 4 has a second temperature T₂ corresponding to the radiator temperature T_{R}. The coolant flow entering the cylinder block 3 has a first coolant temperature T₁ which is related to the flows and the temperatures of the coolants in the radiator outlet line 7b, the bypass line 8 and the cylinder head outlet line 4b.

In the other manner, the second three way valve 12 is controlled such that it directs a part of the coolant flow from the bypass line 8 to the cylinder block inlet line 3a and a remaining part of the coolant flow to the cylinder head inlet line 4a. The entire coolant flow from the radiator 7 is directed to the cylinder head inlet line 4a. In this case, the coolant entering the cylinder block 3 has a first coolant temperature T₁ which is related to the flows and the temperatures of the coolants from the bypass line 8 and the cylinder head outlet line 4b. The coolant entering the cylinder head 4 has a second coolant temperature T₂ which is related to the flows and the temperatures of the coolants from the radiator 7 and the bypass line 8. Consequently, it is possible to create coolant flows at different temperatures T₁, T₂ for cooling of the cylinder block 3 and the cylinder head 4 at all operating conditions. It is, for example, possible to cool the cylinder head 4 to a lower temperature than the cylinder block 3 to reduce the fuel consumption of the combustion engine 2.

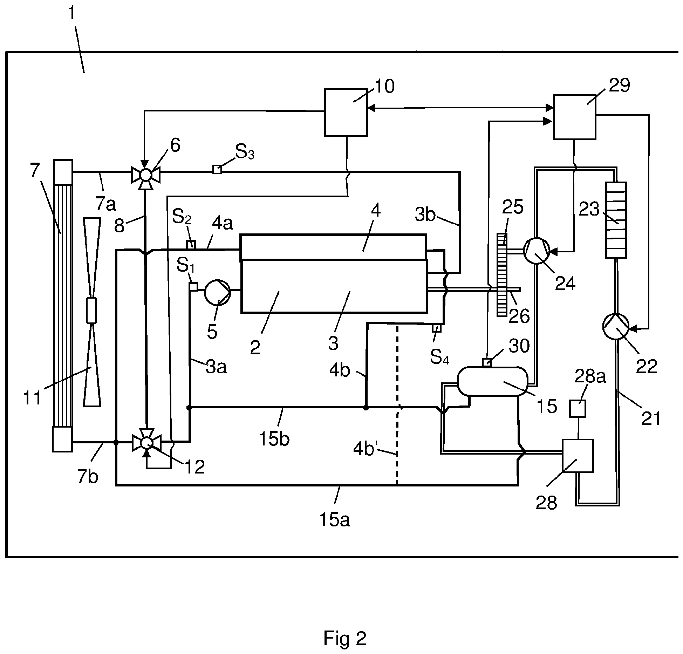

Fig. 2 shows an embodiment in which the cooling system also cools a working medium in a condenser 15 of a WHR system (Waste Heat Recovery system). The cooling system comprises a condenser inlet line 15a directing coolant to the condenser 15 and a condenser outlet line 15b directing coolant from the condenser 15 to the cylinder block inlet line 3a. The condenser inlet line 15a receives coolant from the same position of the cooling system as the cylinder head inlet line 4a. Thus, the working medium is cooled in the condenser 15 by coolant at the same second temperature T₂ as the coolant cooling the cylinder head 4. The cylinder head outlet line 4b directs coolant from the cylinder head 4 to the condenser outlet line 15b. In this case, the cylinder head 4 and the condenser 15 are arranged in parallel. An alternative cylinder head outlet line 4b' is indicated with a dotted line. The alternative cylinder head outlet line 4b' directs coolant from the cylinder head 4 to the condenser inlet line 15a. In this case, the cylinder head 4 and the condenser 15 are arranged in series.

The WHR-system comprises a closed circuit 21 with a circulating working medium. A pump 22 which pressurizes and circulates a working medium in a closed a circuit 21. In this case, the working medium is ethanol. However, it is possible to use other kinds of working mediums such as for example R245fa. The pump 22 directs the working medium to an evaporator 23. The working medium is heated in the evaporator 23, for example, by exhaust gases from the combustion engine. The working medium is heated in the evaporator 23 to a temperature at which it evaporates. The working medium is circulated from the evaporator 23 to an expander 24. The pressurised and heated working medium expands in the expander 24. The expander 24 generates a rotary motion which may be transmitted, via a suitable mechanical transmission 25, to a shaft 26 of the power train of the vehicle 1. Alternatively, the expander 24 may be connected to a generator transforming mechanical energy into electrical energy. The electrical energy may be stored in a battery. The stored electrical energy can be supplied to an electrical engine for driving of the vehicle 1 or a component on the vehicle in a later state.

When the working medium has passed through the expander 24, it is directed to the condenser 15. The working medium is cooled in the condenser 15 by coolant from the condenser inlet line 15a to a temperature at which it condenses. The working medium is directed from the condenser 15 to a receiver 28. The pressure in the receiver 28 can be varied by means of a pressure regulator 28a. The pump 22 sucks working medium from the receiver 28. A second control unit 29 controls the operation of the WHR-system. The second control unit 29 controls the operation of the pump 22 and the expander 24. The WHR-system makes it possible to transform thermal energy from the exhaust gases to mechanical energy or electrical energy. A pressure sensor 30 or a temperature sensor senses the condensation pressure or the condensation temperature of the working medium in the condenser 15.

The temperature of exhaust gases and thus the heating effect of the working medium in the evaporator 23 varies during different operating conditions. In order to maintain a substantially continuously high thermal efficiency in the WHR-system, the working medium is to be cooled with an adjustable cooling effect in the condenser 15. It is favourable to establish a condensation pressure as low as possible at the different operating conditions. However, it is suitable to avoid negative pressure in the WHR-system by practical reasons. In view of these facts, it is suitable to provide a cooling of the working medium in the condenser 15 to a condensation pressure just above 1bar. Consequently, in order to maintain a high thermal efficiency it is necessary to adjust the cooling effect of the working medium in the condenser 15 in view of the supplied heat energy from the exhaust gases such that the condensation pressure will be just above 1 bar. The working medium ethanol has a condensation temperature of 78°C at 1 bar. In this case, it is suitable to accomplish a condensation temperature of just above 78°C in the condenser 15.

During operation, the control unit 10 also receives information from the second control unit 29 about the operating condition of the WHR system. The control unit 10 may, for example, receive information from the sensor 30 about the actual condensation temperature in the condenser 15. The control unit 10 determines a desired condensation temperature of the working medium in the condenser 15. When ethanol is used as working medium, a condensation temperature of about 80°C is desirable during most operating conditions. The control unit 10 estimates a required flow and second temperature T₂ of the coolant to be directed to the condenser 15 in order to provide the determined condensation temperature in the condenser 15. The cylinder head inlet line 4a directs coolant to the cylinder head 4 at a corresponding second coolant temperature T₂. The coolant flow entering the cylinder block 3 is a mixture of the coolant flows in the cylinder block inlet line 3a, the cylinder head outlet line 4b and the condenser outlet line 15b. Since the coolant flows in the cylinder head outlet line 4b and the condenser outlet line 15b has been heated to a higher temperature than T₂, the coolant flow entering the cylinder block 3 has a first coolant temperature T₁ which is higher than the second coolant temperature T₂.

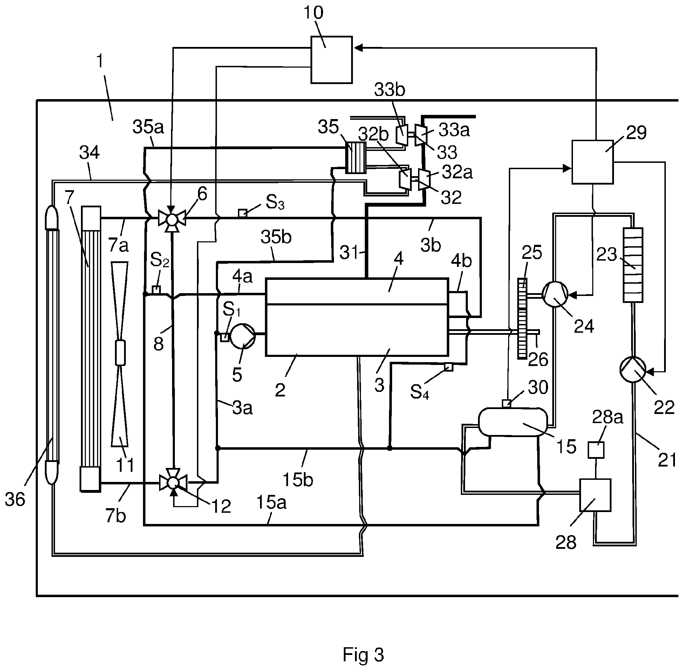

Fig 3 shows a further embodiment in which the cooling system also cools charge air in a charge air cooler 35. The cooling system comprises a charge air cooler inlet line 35a directing coolant to the charge air cooler 35 and a charge air cooler outlet line 35b directing coolant from the charge air cooler 35 to the cylinder block inlet line 3a. The charge air cooler inlet line 35a receives coolant from the same position of the cooling system as the cylinder head inlet line 4 and the condenser inlet line 15a. Thus, the charge air is cooled in the charge air cooler by coolant at the same second temperature T₂ as the coolant cooling the working medium in the condenser 15 and the coolant cooling the cylinder head 4.

The combustion engine 2 is provided with a high pressure turbo unit 32 comprising a turbine 32a and a compressor 32b, and a low pressure turbo unit 33 comprising a turbine 33a and a compressor 33b. The exhaust gases are initially led through the turbine 32a of the high pressure turbo unit 32. The high pressure turbine 32a is thus provided with driving power which is transmitted, via a connection, to the compressor 32b of the high pressure turbo unit 32. The exhaust gases are thereafter led through the turbine 33a of the low pressure turbo unit 33. The low pressure turbine 33a is provided with driving power which is transmitted, via a connection, to the compressor 33b of the low pressure turbo unit 33. The low pressure compressor 33b drawn air into an air inlet line 34. The air in the inlet line 34 is compressed in a first stage by the low pressure compressor 33b to a first pressure. The compressed air is cooled in a first charge air cooler 35. The cooled compressed air is compressed in a second stage in the high pressure compressor 33b. The air in the air inlet line 34 is cooled in a second stage in a second charge air cooler 36 arranged at a front portion of the vehicle in a position upstream of the radiator 7 before it is directed to the combustion engine 2.

The amount of charge air which can be received and compressed in the compressors 32b, 33b depends on the specific volume of the charge air. The charge air leaving the low pressure compressor 33b has a raised pressure and a raised temperature. In order to reduce the specific volume of the charge air and increase the amount of charge air which can be received and compressed in the high pressure compressor 32b, the charge air is cooled in the charge air cooler 35 which is arranged in a position between the compressors 32b, 33b. It is desired to use coolant at a low temperature to cool the charge air. In this case, coolant at the second temperature T₂ is cools the charge air in the charge air cooler 35.

The invention is not restricted to the described embodiment but may be varied freely within the scope of the claims. The cooling system may be used to cool an arbitrary further object beyond the cylinder bodies and the cylinder head by coolant at the second temperature (T₂).

## Claims

1. A cooling system for cooling of a combustion engine (2), wherein the cooling system comprises a radiator inlet line (7a) configure to direct coolant to a radiator (7), a radiator outlet line (7b) configured to receive coolant from the radiator (7), a radiator bypass line (8) configured to direct coolant past the radiator (7), a cylinder block inlet line (3a) configured to direct coolant at a first temperature (T₁) to the cylinder block (3) of the combustion engine (2) and a cylinder block outlet line (3b) configured to receive coolant from the cylinder block (3), a cylinder head inlet line (4a) configured to direct coolant at a second temperature (T₂) to the cylinder head (4) of the combustion engine (2) and a cylinder head outlet line (4b) configured to receive coolant from the cylinder head (4), and wherin the cylinder head outlet line (4b) is configured to direct coolant to the cylinder block inlet line (3a) such that the coolant at the first temperature (T₁) directed to the cylinder block (3) has a higher temperature than the coolant at the second temperature (T₂) directed to the cylinder head (4), wherein the cooling system comprises a first valve device (6) configured to receive coolant from the cylinder block outlet line (3b) and to direct coolant to the radiator inlet line (7a) and/or the radiator bypass line (8) and a second valve device (12) configured to receive coolant from the radiator outlet line (7b) and/or the radiator bypass line (8) and to direct the coolant to the cylinder block inlet line (3a) and the cylinder head inlet line (4a), **characterised in that** the first valve device (6) is a three way valve (6).

2. A cooling system according to any one of the preceding claims, **characterized in that** the cooling system comprises a control unit (10) configured to control the first valve device (6) and the second valve device (12).

3. A cooling system according to claim 2, **characterized in that** the control unit (10) is configured to receive information from a number of temperature sensors (S₁, S₂, S₃, S₄) arranged in different positions of the cooling system and to control the valve devices (6, 12) by means of this information.

4. A cooling system according to claim 2 or 3, **characterized in that** the control unit (10) is configured to estimate a suitable second coolant temperature (T₂) and to control the first valve device (6) such that it directs a coolant flow to the radiator (7) such that the coolant leaving the radiator (7) has a temperature which is lower or equal to the second coolant temperature (T₂).

5. A cooling system according to any one of the claim 2 to 4, **characterized in that** the control unit (10) is configured to estimate a suitable first temperature (T₁) of the coolant to be directed to the cylinder block (3) and to control the second valve device (12) such that it delivers a coolant flow to the cylinder block inlet line (3a) which in a mixed state with the coolant flows from the cylinder head outlet line (4b) creates a coolant flow at the first temperature (T₁) to the cylinder block (3).

6. A cooling system according to any one of the preceding claims, **characterized in that** the cooling system comprises a further circuit (15a, 15b, 35a, 35b) for cooling of a further object (15, 35) by coolant at the second temperature (T₂).

7. A cooling system according to claim 6, **characterized in that** the further circuit comprises a further object outlet line (15b, 35b) configured to direct coolant from the further object (15, 35) to the cylinder block inlet line (3a)

8. A cooling system according to any one of the preceding claims, **characterized in that** the further object is working medium in a condenser (15) of a WHR system.

9. A cooling system according to claim 2 and 8, **characterized in that** the control unit (10) is configured to determine a suitable condensation temperature of the working medium in the condenser (15) and estimate a second temperature (T₂) and flow of the coolant to be directed to the condenser (15) at which the working medium obtains the determined condensation temperature and to control the second valve device (12) such that the estimated coolant flow at the second temperature (T₂) is directed to the condenser (7).

10. A cooling system according to claim 6 or 7, **characterized in that** the further object is a charge air cooler (35) arranged in a position between a low pressure compressor (33b) and a high pressure compressor (32b).

11. A cooling system according to any one of the preceding claims, **characterized in that** the second valve device is a three way valve (12).

12. A vehicle comprising a cooling system according to any one of the preceding claims 1-11.

## Patentansprüche

1. Kühlsystem zum Kühlen eines Verbrennungsmotors (2), wobei das Kühlsystem umfasst: eine Kühlereinlassleitung (7a), die dazu eingerichtet ist, Kühlmittel zu einem Kühler (7) zu leiten, eine Kühlerauslassleitung (7b), die dazu eingerichtet ist, Kühlmittel aus dem Kühler (7) aufzunehmen, eine Kühlerumgehungsleitung (8), die dazu eingerichtet ist, Kühlmittel an dem Kühler (7) vorbeizuleiten, eine Zylinderblockeinlassleitung (3a), die dazu eingerichtet ist, Kühlmittel mit einer ersten Temperatur (T₁) zu dem Zylinderblock (3) des Verbrennungsmotors (2) zu leiten, und eine Zylinderblockauslassleitung (3b), die dazu eingerichtet ist, Kühlmittel aus dem Zylinderblock (3) zu empfangen, eine Zylinderkopfeinlassleitung (4a), die dazu eingerichtet ist, Kühlmittel mit einer zweiten Temperatur (T₂) zu dem Zylinderkopf (4) des Verbrennungsmotors (2) zu leiten, und eine Zylinderkopfauslassleitung (4b), die dazu eingerichtet ist, Kühlmittel aus dem Zylinderkopf (4) zu empfangen, und wobei die Zylinderkopfauslassleitung (4b) dazu eingerichtet ist, Kühlmittel zu der Zylinderblockeinlassleitung (3a) zu leiten, sodass das mit der ersten Temperatur (T₁) zu dem Zylinderblock (3) geleitete Kühlmittel eine höhere Temperatur aufweist als das mit der zweiten Temperatur (T₂) zu dem Zylinderkopf (4) geleitete Kühlmittel, wobei das Kühlsystem umfasst: eine erste Ventilvorrichtung (6), die dazu eingerichtet ist, Kühlmittel aus der Zylinderblockauslassleitung (3b) zu empfangen und Kühlmittel zu der Kühlereinlassleitung (7a) und/oder der Kühlerumgehungsleitung (8) zu leiten, und eine zweite Ventilvorrichtung (12), die dazu eingerichtet ist, Kühlmittel aus der Kühlerauslassleitung (7b) und/oder der Kühlerumgehungsleitung (8) zu empfangen und das Kühlmittel zu der Zylinderblockeinlassleitung (3a) und der Zylinderkopfeinlassleitung (4a) zu leiten, **dadurch gekennzeichnet, dass** die erste Ventilvorrichtung (6) ein Dreiwegeventil (6) ist.

2. Kühlsystem nach einem der vorangehenden Ansprüche, **dadurch gekennzeichnet, dass** das Kühlsystem eine Steuereinheit (10) umfasst, die dazu eingerichtet ist, die erste Ventilvorrichtung (6) und die zweite Ventilvorrichtung (12) zu steuern.

3. Kühlsystem nach Anspruch 2, **dadurch gekennzeichnet, dass** die Steuereinheit (10) dazu eingerichtet ist, Informationen von einer Anzahl von an verschiedenen Positionen des Kühlsystems angeordneten Temperatursensoren (S1, S2, S3, S4) zu empfangen und die Ventilvorrichtungen (6, 12) anhand dieser Informationen zu steuern.

4. Kühlsystem nach Anspruch 2 oder 3, **dadurch gekennzeichnet, dass** die Steuereinheit (10) dazu eingerichtet ist, eine geeignete zweite Kühlmitteltemperatur (T₂) zu schätzen und die erste Ventilvorrichtung (6) derart zu steuern, dass sie einen Kühlmittelstrom zu dem Kühler (7) leitet, sodass das den Kühler (7) verlassende Kühlmittel eine Temperatur aufweist, die niedriger oder gleich der zweiten Kühlmitteltemperatur (T₂) ist.

5. Kühlsystem nach einem der Ansprüche 2 bis 4, **dadurch gekennzeichnet, dass** die Steuereinheit (10) dazu eingerichtet ist, eine geeignete erste Temperatur (T₁) des zu dem Zylinderblock (3) zu leitenden Kühlmittels zu schätzen und die zweite Ventilvorrichtung (12) derart zu steuern, dass sie einen Kühlmittelstrom zu der Zylinderblockeinlassleitung (3a) zuführt, der in einem Mischzustand mit den Kühlmittelströmen aus der Zylinderkopfauslassleitung (4b) einen Kühlmittelstrom mit der ersten Temperatur (T₁) zu dem Zylinderblock (3) erzeugt.

6. Kühlsystem nach einem der vorangehenden Ansprüche, **dadurch gekennzeichnet, dass** das Kühlsystem einen weiteren Kreislauf (15a, 15b, 35a, 35b) zum Kühlen eines weiteren Objekts (15, 35) durch ein Kühlmittel mit der zweiten Temperatur (T₂) umfasst.

7. Kühlsystem nach Anspruch 6, **dadurch gekennzeichnet, dass** der weitere Kreislauf eine weitere Objektauslassleitung (15b, 35b) umfasst, die dazu eingerichtet ist, Kühlmittel von dem weiteren Objekt (15, 35) zu der Zylinderblockeinlassleitung (3a) zu leiten.

8. Kühlsystem nach einem der vorangehenden Ansprüche, **dadurch gekennzeichnet, dass** das weitere Objekt ein Arbeitsmedium in einem Kondensator (15) eines WHR-Systems (Abwärmerückgewinnungssystems; engl.: waste heat recovery system) ist.

9. Kühlsystem nach Anspruch 2 und 8, **dadurch gekennzeichnet, dass** die Steuereinheit (10) dazu eingerichtet ist, eine geeignete Kondensationstemperatur des Arbeitsmediums in dem Kondensator (15) zu bestimmen und eine zweite Temperatur (T₂) und einen Strom des zu dem Kondensator (15) zu leitenden Kühlmittels zu schätzen, bei denen das Arbeitsmedium die bestimmte Kondensationstemperatur erreicht, und die zweite Ventilvorrichtung (12) derart zu steuern, dass der geschätzte Kühlmittelstrom mit der zweiten Temperatur (T₂) zum Kondensator (7) geleitet wird.

10. Kühlsystem nach Anspruch 6 oder 7, **dadurch gekennzeichnet, dass** das weitere Objekt ein Ladeluftkühler (35) ist, der in einer Position zwischen einem Niederdruckkompressor (33b) und einem Hochdruckkompressor (32b) angeordnet ist.

11. Kühlsystem nach einem der vorangehenden Ansprüche, **dadurch gekennzeichnet, dass** die zweite Ventilvorrichtung ein Dreiwegeventil (12) ist.

12. Fahrzeug mit einem Kühlsystem nach einem der vorangehenden Ansprüche 1-11.

## Revendications

1. Système de refroidissement destiné au refroidissement d'un moteur à combustion (2), dans lequel le système de refroidissement comprend une conduite d'entrée de radiateur (7a) configurée pour diriger le liquide de refroidissement vers un radiateur (7), une conduite de sortie de radiateur (7b) configurée pour recevoir du liquide de refroidissement depuis le radiateur (7), une conduite de dérivation de radiateur (8) configurée pour diriger le liquide de refroidissement au-delà du radiateur (7), une conduite d'entrée de bloc-cylindres (3a) configurée pour diriger le liquide de refroidissement à une première température (T₁) vers le bloc-cylindres (3) du moteur à combustion (2) et une conduite de sortie de bloc-cylindres (3b) configurée pour recevoir le liquide de refroidissement en provenance du bloc-cylindres (3), une conduite d'entrée de culasse (4a) configurée pour diriger le liquide de refroidissement à une deuxième température (T₂) vers la culasse (4) du moteur à combustion (2) et une conduite de sortie de culasse (4b) configurée pour recevoir le liquide de refroidissement en provenance de la culasse (4), et dans lequel la conduite de sortie de culasse (4b) est configurée pour diriger le liquide de refroidissement vers la conduite d'entrée de bloc-cylindres (3a) de telle sorte que le liquide de refroidissement à la première température (T₁) dirigé vers le bloc-cylindres (3) a une température supérieure au liquide de refroidissement à la deuxième température (T₂) dirigé vers la culasse (4),
dans lequel le système de refroidissement comprend un premier dispositif de soupape (6) configuré pour recevoir du liquide de refroidissement en provenance de la conduite de sortie de bloc-cylindres (3b) et pour diriger le liquide de refroidissement vers la conduite d'entrée de radiateur (7a) et/ou la conduite de dérivation de radiateur (8) et un deuxième dispositif de soupape (12) configuré pour recevoir du liquide de refroidissement en provenance de la conduite de sortie de radiateur (7b) et/ou la conduite de dérivation de radiateur (8) et pour diriger le liquide de refroidissement vers la conduite d'entrée de bloc-cylindres (3a) et la conduite d'entrée de culasse (4a), **caractérisé en ce que** le premier dispositif de soupape (6) est une soupape à trois voies (6).

2. Système de refroidissement selon l'une quelconque des revendications précédentes, **caractérisé en ce que** le système de refroidissement comprend une unité de commande (10) configurée pour commander le premier dispositif de soupape (6) et le deuxième dispositif de soupape (12).

3. Système de refroidissement selon la revendication 2, **caractérisé en ce que** l'unité de commande (10) est configurée pour recevoir des informations provenant d'un certain nombre de capteurs de température **(S₁, S₂, S₃, S₄)** agencés dans différentes positions du système de refroidissement et pour commander les dispositifs de soupape (6, 12) au moyen de ces informations.

4. Système de refroidissement selon la revendication 2 ou 3, **caractérisé en ce que** l'unité de commande (10) est configurée pour estimer une deuxième température de liquide de refroidissement appropriée (T₂) et pour commander le premier dispositif de soupape (6) de telle sorte qu'il dirige un écoulement de liquide de refroidissement vers le radiateur (7) de telle sorte que le liquide de refroidissement quittant le radiateur (7) a une température qui est inférieure ou égale à la deuxième température de liquide de refroidissement (T₂).

5. Système de refroidissement selon l'une quelconque des revendications 2 à 4, **caractérisé en ce que** l'unité de commande (10) est configurée pour estimer une première température appropriée (T₁) du liquide de refroidissement à diriger vers le bloc-cylindres (3) et pour commander le deuxième dispositif de soupape (12) de telle sorte qu'il délivre un écoulement de liquide de refroidissement à la conduite d'entrée de bloc-cylindres (3a) qui, à l'état mélangé avec les écoulements de liquide de refroidissement provenant de la conduite de sortie de culasse (4b), crée un écoulement de liquide de refroidissement à la première température (T₁) vers le bloc-cylindres (3).

6. Système de refroidissement selon l'une quelconque des revendications précédentes, **caractérisé en ce que** le système de refroidissement comprend un autre circuit (15a, 15b, 35a, 35b) destiné à refroidir un autre objet (15, 35) par un liquide de refroidissement à la deuxième température (T₂).

7. Système de refroidissement selon la revendication 6, **caractérisé en ce que** l'autre circuit comprend une autre conduite de sortie d'objet (15b, 35b) configurée pour diriger le liquide de refroidissement depuis l'autre objet (15, 35) vers la conduite d'entrée de bloc-cylindres (3a)

8. Système de refroidissement selon l'une quelconque des revendications précédentes, **caractérisé en ce que** l'autre objet est un fluide de travail dans le condenseur (15) dans le système WHR.

9. Système de refroidissement selon les revendications 2 et 8, **caractérisé en ce que** l'unité de commande (10) est configurée pour déterminer une température de condensation appropriée du fluide de travail dans le condenseur (15) et estimer une deuxième température (T2) et un écoulement du liquide de refroidissement à diriger vers le condenseur (15) au niveau duquel le fluide de travail obtient la température de condensation déterminée et pour commander le deuxième dispositif de soupape (12) de telle sorte que l'écoulement de liquide de refroidissement estimé à la deuxième température (T₂) est dirigé vers le condenseur (7).

10. Système de refroidissement selon la revendication 6 ou 7, **caractérisé en ce que** l'autre objet est un refroidisseur d'air de suralimentation (35) agencé dans une position entre un compresseur basse pression (33b) et un compresseur haute pression (32b) .

11. Système de refroidissement selon l'une quelconque des revendications précédentes, **caractérisé en ce que** le deuxième dispositif de soupape est une soupape à trois voies (12).

12. Véhicule comprenant un système de refroidissement selon l'une quelconque des revendications précédentes 1 à 11.
